(19) **Europäisches Patentamt / European Patent Office / Office européen des brevets**

(11) **EP 2 937 396 B1**

(12) **EUROPEAN PATENT SPECIFICATION**

(45) Date of publication and mention
of the grant of the patent:
**06.12.2017 Bulletin 2017/49**

(21) Application number: **13866457.8**

(22) Date of filing: **19.12.2013**

(51) Int Cl.:
*C09J 175/04* (2006.01)  *C08G 18/75* (2006.01)
*C08G 18/76* (2006.01)  *C08G 18/20* (2006.01)
*C08G 18/30* (2006.01)  *C09J 175/06* (2006.01)
*C08G 18/18* (2006.01)  *C08G 18/10* (2006.01)
*C08G 18/44* (2006.01)

(86) International application number:
**PCT/JP2013/084063**

(87) International publication number:
**WO 2014/098178 (26.06.2014 Gazette 2014/26)**

(54) **MOISTURE-CURABLE HOT-MELT ADHESIVE AGENT**

FEUCHTIGKEITSHÄRTBARE SCHMELZKLEBERZUSAMMENSETZUNG

AGENT ADHÉSIF THERMOFUSIBLE DURCISSABLE À L'HUMIDITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2012 JP 2012279937**

(43) Date of publication of application:
**28.10.2015 Bulletin 2015/44**

(73) Proprietor: **Henkel AG & Co. KGaA
40589 Düsseldorf (DE)**

(72) Inventors:
• **TAMOGAMI, Tsuyoshi
Minoo-shi
Osaka 562-8586 (JP)**
• **HAYAKAWA, Tadashi
Minoo-shi
Osaka 562-8586 (JP)**

(56) References cited:
**EP-A2- 1 876 197**    **WO-A1-2009/072431**
**WO-A1-2012/096111**    **DE-A1-102006 056 478**
**JP-A- H02 305 882**    **JP-A- 2008 222 784**
**US-A- 4 413 111**    **US-A1- 2009 208 759**

**Description**

Technical Field

The present invention relates to a moisture-curable hot melt adhesive. More particularly, the present invention relates to a moisture-curable hot melt adhesive which is excellent in adhesion property, light resistance and curing property (heat resistance), and is particularly suitable for automobile interior applications.

Background Art

A moisture-curable hot melt adhesive is employed in various fields such as building interior materials (or building materials) and electronic materials. The moisture-curable hot melt adhesive contains a urethane prepolymer having isocyanate group(s) at the ends. Generally, the adhesive generates initial bonding by being applied to both adherends (or a base material and an adherend) in a hot molten state, and cooled and solidified, and then adhesive force and curing property (heat resistance) of the adhesive are improved by moisture curing by cross-linking isocyanate groups with moisture in atmospheric air, and thus increasing molecular weight of the urethane prepolymer.

Patent Document 1 discloses that a reactive (moisture-curable) hot melt adhesive (polycarbonate-based urethane prepolymer) obtained by the reaction of a polycarbonate based polyol with a polyisocyanate has improved initial adhesive force and an adhesive force after curing, and is excellent in heat resistance (heat-resistant adhesive force) and moisture resistance (or water resistance) (see lines 8 to 14 in the upper right column on page 2, from line 11 in the upper right column to line 14 in the lower left column on page 5, [Examples] and [Effects of the Invention] of Patent Document 1).

Patent Document 2 discloses a reactive (moisture-curable) hot melt adhesive which is excellent in adhesion property after curing, heat resistance, and hot water resistance (see Patent Document 2 [0006] and [0069] to [0070]). It also discloses that a polycarbonate polyol is usable as a polyol for the production of a urethane prepolymer (see Patent Document 2 [0009] and [0022]). Patent Document 2 discloses that the reactive (moisture-curable) hot melt adhesive is used as materials such as building materials, fiber materials and plastics, and is used in applications such as concretes, nonwoven fabrics, carpets, glass, paper processing and electrical appliances (see Patent Document 2 [0071]).

Patent document 3 discloses a moisture-curable polyurethane hot melt adhesive containing a urethane prepolymer obtained by reacting a polyol (A) with a polyisocyanate (B), wherein polyol (A) contains polycarbonate polyol (a1), polytetramethylene glycol_(a2) and polyester polyol (a3). The polyisocyanate (B) can be selected from aromatic diisocyanates, aliphatic diisocyanates or alicyclic diisocyanates, while aromatic diisocyanates are preferred (abstract, claim 1, [0078]).

However, it is required for the moisture-curable hot melt adhesive to be excellent in not only initial adhesion property but also adhesion property (adhesive force) after aging and weatherability. In recent years, it is regarded as important that the moisture-curable hot melt adhesive is excellent in weatherability, especially light resistance. When the moisture-curable hot melt adhesive is used as the interior portions of houses and automobile interior materials, the cured moisture-curable hot melt adhesive may be turned yellow and undergo deterioration, leading to cracking, with the lapse of time due to sunlight (ultraviolet rays) transmitted through glass.

It is not intended to use the moisture-curable hot melt adhesives of Patent Documents 1 and 2 for the interior portions of houses and automobile interior materials, and it is hard to say that the moisture-curable hot melt adhesives are sufficiently excellent in light resistance (light-resisting adhesive force, yellowing and fading, etc.).

As mentioned above, there has recently been required a moisture-curable hot melt adhesive which is not only usable for outdoors, but also usable for the interior portions of houses and automobile interior materials. There is an urgent need to develop the moisture-curable hot melt adhesive which is less likely to deteriorate under sunlight (ultraviolet rays) and high temperature and high humidity conditions, and is also excellent in light resistance, heat resistance and moisture resistance, particularly, in the field of automobiles.

Patent Document 1: JP 2-305882 A
Patent Document 2: JP 2007-51282 A
Patent Document 3: US 2009/208759 A1

Disclosure of the Invention

Problems to be Solved by the Invention

The present invention has been made so as to solve such a problem and an object thereof is to provide a moisture-curable hot melt adhesive which is excellent in adhesion property (initial adhesion property and adhesion property after aging), light resistance (light-resisting adhesive force, yellowing and fading, etc.) and curing property (heat resistance).

Means for Solving the Problems

The present inventors have intensively studied and found, surprisingly, that it is possible to obtain a moisture-curable hot melt adhesive which is excellent in adhesion property, light resistance and curing property (heat resistance) when a urethane prepolymer includes a certain specific structure, thus completing the present invention.

Namely, the present invention provides, in an aspect, a moisture-curable hot melt adhesive comprising an alicyclic urethane prepolymer having isocyanate group(s) at the ends, wherein the alicyclic urethane prepolymer comprises a chemical structure derived from a polycarbonate polyol, and at least one of the isocyanate group(s) at the ends is combined with a chemical structure derived from an aromatic ring, and wherein the alicyclic urethane prepolymer comprises a urethane prepolymer obtainable by mixing an alicyclic polycarbonate urethane polyol with an aromatic isocyanate, and the alicyclic polycarbonate urethane polyol comprises an alicyclic polyol obtainable by mixing a polycarbonate polyol with an alicyclic isocyanate.

In the present invention, the alicyclic urethane prepolymer preferably comprises a prepolymer obtainable by mixing an alicyclic polycarbonate urethane polyol and a polycarbonate polyol with an aromatic isocyanate.

The present invention provides, in a preferred embodiment, the moisture-curable hot melt adhesive, which is used for the production of an automobile interior material.

The present invention provides, in another aspect, an automobile interior material obtainable by applying the moisture-curable hot melt adhesive.

The present invention provides, in a preferred aspect, a method for producing a moisture-curable hot melt adhesive, which comprises the following steps (A) and (B):

(A) a step of mixing a polycarbonate polyol with an alicyclic isocyanate to prepare an alicyclic polycarbonate urethane polyol; and
(B) a step of mixing the alicyclic polycarbonate urethane polyol with an aromatic isocyanate to prepare an alicyclic urethane prepolymer.

Effects of the Invention

The moisture-curable hot melt adhesive of the present invention comprises an alicyclic urethane prepolymer having isocyanate group(s) at the ends, wherein the alicyclic urethane prepolymer comprises a chemical structure derived from a polycarbonate polyol, and at least one of the isocyanate group(s) at the ends is combined with a chemical structure derived from an aromatic ring, and wherein the alicyclic urethane prepolymer comprises a urethane prepolymer obtainable by mixing an alicyclic polycarbonate urethane polyol with an aromatic isocyanate, and the alicyclic polycarbonate urethane polyol comprises an alicyclic polyol obtainable by mixing a polycarbonate polyol with an alicyclic isocyanate is therefore excellent in adhesion property, especially adhesion property after aging is improved, light resistance (light-resisting adhesive force, yellowing and fading, etc.), and curing property (heat resistance).

In the moisture-curable hot melt adhesive of the present invention, when the alicyclic urethane prepolymer comprises a prepolymer obtainable by mixing an alicyclic polycarbonate urethane polyol and an polycarbonate polyol with an aromatic isocyanate, adhesion property, especially adhesion property after aging is improved, and also light resistance is more improved.

When the moisture-curable hot melt adhesive of the present invention is used for the production of an automobile interior material, it is possible to improve durability of the automobile interior material against sunlight and heat.

Since the automobile interior material of the present invention is produced by using the moisture-curable hot melt adhesive, the automobile interior material causes neither discoloration nor deterioration leading to cracking even when exposed to sunlight or high temperature.

Since the method for producing a moisture-curable hot melt adhesive of the present invention comprises:

(A) a step of mixing a polycarbonate polyol with an alicyclic isocyanate to prepare an alicyclic polycarbonate urethane polyol; and
(B) a step of mixing the alicyclic polycarbonate urethane polyol with an aromatic isocyanate to prepare an alicyclic urethane prepolymer, the alicyclic urethane prepolymer has a chemical structure derived from a polycarbonate polyol, and also at least one of isocyanate group(s) at the ends is combined with an aromatic ring, thus enabling the production of a moisture-curable hot melt adhesive which is excellent in adhesion property, light resistance (light-resisting adhesive force, yellowing and fading, etc.), and curing property (heat resistance).

Description of Embodiments

The moisture-curable hot melt adhesive according to the present invention comprises "an alicyclic urethane prepolymer having isocyanate group(s) at the ends".

In the present invention, the "alicyclic urethane prepolymer" refers to a urethane prepolymer having a "chemical structure derived from an alicyclic structure" included in an alicyclic compound.

The alicyclic structure refers to a carbocyclic structure which is a structure in which carbon atoms are circularly combined, but which does not belong to an aromatic ring structure and which includes, for example, a cycloalkyl group or the like.

The "chemical structure derived from an alicyclic structure" refers to a carbocyclic structure per se which does not belong to such aromatic ring structure, and a structure in which such carbocyclic structure is substituted (or carbocyclic structure having a substituent).

In the present description, the "alicyclic compound" refers to a carbocyclic compound having no aromatic ring structure. Specific examples of such alicyclic compound include cycloalkanes and cycloalkenes.

Examples of the monocyclic cycloalkanes include cyclopropane, cyclobutane, cyclopentane, cyclohexane, cycloheptane, cyclooctane, cyclononane, cyclodecane, cycloundecane, and cyclododecane.

Examples of the monocyclic cycloalkenes incude cyclopropene, cyclobutene, cyclohexene, cycloheptene, and cyclooctene.

Examples of the bicyclic alkanes include bicycloundecane and decahydronaphthalene.

Examples of the bicyclic alkenes include norbornene and norbornenediene.

In the present description, the "alicyclic urethane prepolymer having isocyanate group(s) at the ends" is usually understood as a "urethane prepolymer", and refers to a urethane prepolymer which has isocyanate group(s) at both ends and also has a chemical structure derived from a polycarbonate polyol. It is necessary for at least one of the isocyanate group(s) located at one end of the "alicyclic urethane prepolymer" relating to the present invention to be combined with a chemical structure derived from an aromatic ring. The alicyclic urethane prepolymer according to the present invention has two or more ends, and preferably two ends. The alicyclic urethane prepolymer has an isocyanate group(s) at least one end, preferably at two or more ends, and particularly preferably at two ends. At least one of the isocyanate group(s) located at the end is combined with a chemical structure derived from an aromatic ring.

The chemical structure derived from a polycarbonate polyol may be incorporated into the urethane prepolymer in any form as long as the objective moisture-curable hot melt adhesive can be obtained. That is, the chemical structure derived from a polycarbonate polyol may be substituted or not substituted with any substituent on any position.

In the present invention, the "polycarbonate polyol" has no urethane bond and can be distinguished from the below-mentioned polycarbonate urethane polyol.

There is no particular limitation on the polycarbonate polyol as long as the objective moisture-curable hot melt adhesive of the present invention can be obtained.

Specific examples of the polycarbonate polyol include a polycarbonate polyol obtainable by reacting a polyol having 2 to 18 carbon atoms with a carbonate compound having 3 to 18 carbon atoms or phosgene, and
a polycarbonate polyol obtainable by ring-opening polymerization of a cyclic carbonate compound having 3 to 18 carbon atoms with a polyol such as low-molecular polyol, polyether polyol, polyester polyol, or polycarbonate polyol.

Examples of the polyol having 2 to 18 carbon atoms include ethylene glycol, 1,3-propanediol, 1,4-butanediol, 1,5-pentanediol, 3-methyl-1,5-pentanediol, 1,6-hexanediol, 1,7-heptanediol, 1,8-octanediol, 1,9-nonanediol, 1,10-decanediol, 1,12-dodecanediol, diethylene glycol, triethylene glycol, neopentyl glycol, 2,2-dimethyl-1,3-propanediol, 2,4-diethyl-1,5-pentanediol, 3-methyl-1,5-pentanediol, 2-methyl-1,8-octanediol, 2-ethyl-2-butyl-1,3-propanediol, 1,3-cyclohexanedimethanol, 1,4-cyclohexanedimethanol, 1,4-cyclohexanediol, trimethylolethane, trimethylolpropane, and pentaerythritol.

Examples of the carbonate compound having 3 to 18 carbon atoms include dimethyl carbonate, diethyl carbonate, ethylenecarbonate, and diphenyl carbonate. These polycarbonate polyols may be used alone, or plural polycarbonates may be used.

In the present invention, a polycarbonate polyol including a polyol having 4 to 12 carbon atoms as a component thereof is preferable.

The polycarbonate polyol is preferably an aliphatic polycarbonate polyol, and particularly preferably an aliphatic polycarbonate diol. The polyol preferably has a number average molecular weight (Mn) of 400 to 8,000, and particularly preferably 500 to 4,000.

As used herein, the number average molecular weight (Mn) refers to a value measured by gel permeation chromatography (GPC), followed by conversion (or modification) even when it is Mn of the polyol or Mn of the other components. More specifically, the Mn refers to a value measured by using the below-mentioned GPC apparatus and measuring method, followed by conversion. 600E manufactured by Waters Corporation was used as a GPC apparatus, and RI (Waters410) was used as a detector. Two LF-804 manufactured by Shodex were used as a GPC column. A sample was dissolved in tetrahydrofuran and the obtained solution was allowed to flow at a flow rate of 1.0 ml/min and the column temperature of 40°C, and then the Mn was determined by conversion (or modification) of the molecular weight measured using a calibration curve which is obtained by using polystyrene having a monodisperse molecular weight as a standard reference material.

In the present invention, the "alicyclic urethane prepolymer" is obtainable by mixing an alicyclic polycarbonate urethane polyol with an aromatic isocyanate. In the case of mixing the alicyclic polycarbonate urethane polyol with the aromatic isocyanate, it is preferred to further mix with a polycarbonate polyol for the alicyclic urethane prepolymer.

Mixing of the alicyclic polycarbonate urethane polyol with the aromatic isocyanate enables production of an alicyclic urethane prepolymer in which at least one of the terminal isocyanate group(s) is combined with a chemical structure derived from an aromatic ring.

As used herein, the "chemical structure derived from an aromatic ring" means an "aromatic ring per se", or a "chemical structure in which an aromatic ring is substituted". Therefore, at least one of the terminal isocyanate group(s) is combined with an "aromatic ring per se" (that is, directly combined with an aromatic ring), or is combined with a "chemical structure in which an aromatic ring is substituted" (that is, combined with an aromatic ring through a substituent possessed by the aromatic ring, for example, an alkylene group (which preferably has 1 to 3 carbon atoms)). These aromatic rings may further have another substituent. The aromatic ring may be fused. Examples of the "aromatic ring" include phenylene ($-C_6H_4-$) and naphthylene ($-C_{10}H_8-$). Examples of the substituent between the aromatic ring and the isocyanate group include an alkylene group such as a methylene group ($-CH_2-$) or an ethylene group ($-CH_2-CH_2-$). Examples of another substituent include an alkyl group such as methyl or ethyl; an aralkyl group such as phenylmethyl; and an aryl group such as phenyl. Examples of the "aromatic ring per se" include phenylene ($-C_6H_4-$), methylphenylene ($-C_6H_3(CH_3)-$) and methylene-bis(4,1)phenylene ($-C_6H_4-CH_2-C_6H_4-$). Examples of the chemical structure in which an aromatic ring is substituted include o-xylylene, m-xylylene, and p-xylylene ($-CH_2-C_6H_4-CH_2-$).

In the present description, the alicyclic polycarbonate urethane polyol can be obtained by reacting a polycarbonate polyol with an alicyclic isocyanate.

The alicyclic polycarbonate urethane polyol can be produced by chain extension of a polycarbonate diol with an alicyclic diisocyanate. The chain-extended polymer becomes a polyol having a number average molecular weight of 800 to 16,000, and a urethane bond in the terminal hydroxyl group(s), i.e., an alicyclic polycarbonate urethane polyol.

The alicyclic polycarbonate urethane polyol relation to the present invention has the terminal hydroxyl group(s) and is represented by the following formula (I):

(I): HO-[$R_1$-OCO-NH-$R_2$-NH-COO]$_n$-$R_1$-OH wherein $R_1$ in the formula (I) is represented by the following formula (II):
(II): -[$X_1$-OCOO-$X_2$-OCOO]$_m$-$X_1$-

wherein $R_2$ represents a chemical structure derived from an alicyclic structure having 6 to 14 carbon atoms and, specifically, it is preferably isophorylene (1-methylene-1,3,3-trimethylcyclohexane), 1,3-dimethylenecyclohexane, and 4,4'-dicyclohexylmethylene.

In the formula (II), $X_1$ and $X_2$ represent the same or different or alkylene, cycloalkylene or oxaalkylene group having 2 to 18 carbon atoms and, specifically, they are 1,3-propylene, 1,4-butylene, 1,5-pentylene, 1,6-hexylene, 3-methyl-1,5-pentylene, 1,7-heptylene, 1,8-octylene, 1,9-nonylene, 1,10-decylene, 1,12-dodecylene, 3-oxa-1,5-pentylene, 3,6-dioxa-1,8-octylene, 3,6,9-trioxa-1,11-undecylene, and 7-oxa-1,3-tridecylene.

In the formulas (I) and (II), m and n are preferably natural numbers.

m is preferably 1 to 40, more preferably 2 to 20, and particularly preferably 2 to 10. n is preferably 1 to 5, and particularly preferably 1 to 2.

In the present invention, there is no particularly limitation on isocyanate compound as long as the objective urethane prepolymer can be obtained, and it is possible to use an isocyanate compound in a conventional production of a polyurethane. The isocyanate compound preferably includes 1 to 3 isocyanate group(s) on average, and is particularly preferably a difunctional isocyanate compound, so-called diisocyanate compound. These isocyanate compounds can be used alone, or two or more kinds of isocyanate compounds can be used in combination.

In the present invention, the aromatic isocyanate and the alicyclic isocyanate can be used alone or used in combination, and can be used in combination with an aliphatic isocyanate.

In the present invention, the "aromatic isocyanate" refers to an isocyanate compound having an aromatic ring, and it is not necessary for the isocyanate groups to be directly combined with the aromatic ring thereof. The aromatic ring may be a ring in which two or more benzene rings are fused.

Examples of the aromatic isocyanate include 4,4'-diphenylmethane diisocyanate (MDI), p-phenylene diisocyanate, m-phenylene diisocyanate, tolylene diisocyanate (TDI), and xylylene diisocyanate (XDI: OCN-$CH_2-C_6H_4-CH_2$-NCO) .

These aromatic isocyanate compounds can be used alone or used in combination, and it is most preferred to include xylylene diisocyanate (XDI). Xylylene diisocyanate has an aromatic ring and therefore corresponds to an aromatic isocyanate even when the isocyanate groups are not directly combined with an aromatic ring.

The aliphatic isocyanate refers to a compound which has a chain-like hydrocarbon chain in which isocyanate groups are directly combined with the hydrocarbon chain, and also has neither a cyclic hydrocarbon chain nor an aromatic ring.

Examples of the aliphatic isocyanate include 1,4-diisocyanatobutane, 1,5-diisocyanatopentane, hexamethylene diisocyanate (HDI), 1,6-diisocyanato-2,2,4-trimethylhexane, and methyl 2,6-diisocyanatohexanoate (lysine diisocyanate).

The alicyclic isocyanate refers to a compound which has a cyclic hydrocarbon chain and may have a chain-like hydrocarbon chain, and also has no aromatic ring. The isocyanate group may be either directly combined with the cyclic hydrocarbon chain, or may be directly combined with the chain-like hydrocarbon chain which may be present.

Examples of the alicyclic isocyanate include 5-isocyanato-1-isocyanatomethyl-1,3,3-trimethylcyclohexane (isophorone diisocyanate), 1,3-bis(isocyanatomethyl)cyclohexane (hydrogenated xylylene diisocyanate), bis(4-isocyanatocyclohexyl)methane (hydrogenated diphenylmethane diisocyanate), and 1,4-diisocyanatocyclohexane.

These alicyclic isocyanates can be used alone or used in combination, and it is most preferred to include 5-isocyanato-1-isocyanatomethyl-1,3,3-trimethylcyclohexane (isophorone diisocyanate).

It is more preferred that the "alicyclic urethane prepolymer" is produced by reacting the difunctional polyol with the difunctional isocyanate from the viewpoint of control of thermal stability and a production method (and a production process thereof) of the obtainable moisture-curable hot melt adhesive in the present invention. It is preferred to use 2 mol of the difunctional isocyanate based on 1 mol of the difunctional polyol since the objective alicyclic urethane prepolymer can be produced comparatively easily.

Therefore, as an embodiment of the present invention, it is most preferred that, first, a polycarbonate diol is reacted with isophorone diisocyanate to produce an alicyclic polycarbonate urethane polyol, and then the alicyclic polycarbonate urethane polyol is mixed with xylylene diisocyanate and a polycarbonate diol to produce an alicyclic urethane prepolymer.

When the moisture-curable hot melt adhesive as a final product includes an alicyclic urethane prepolymer of the most preferred embodiment as a main component, at least one of the isocyanate groups at both ends is combined with an aromatic ring of post-added xylylene diisocyanate through a methylene group, and also the adhesive also include a chemical structure derived from a polycarbonate polyol. In the above-mentioned most preferred embodiment, since xylylene diisocyanate is added as the aromatic isocyanate, the terminal isocyanate group of the alicyclic urethane prepolymer is not directly combined with the aromatic ring, but is combined with the aromatic ring through a methylene group.

It is possible to analyze the combination of the chemical structure derived from an aromatic ring with the terminal isocyanate group(s), using various apparatuses such as nuclear magnetic resonance (NMR) spectrometer and infrared absorption (IR) spectrometer.

The moisture-curable hot melt adhesive is excellent in adhesion property, light resistance and curing property since at least one of the isocyanate group(s) at both ends are combined with a chemical structure derived from an aromatic ring.

The melt viscosity at 120°C of the moisture-curable hot melt adhesive of the present invention is preferably 3,000 mPa·s to 10,000 mPa·s, more preferably 4,000 mPa·s to 8,000 mPa·s, and particularly preferably 5,000 mPa·s to 8,000 mPa·s.

When the melt viscosity at 120°C of the moisture-curable hot melt adhesive of the present invention is 3,000 mPa·s to 10,000 mPa·s, coatability to an automobile interior material is significantly improved.

As used herein, the melt viscosity at 120°C refers to a value obtained by measuring the viscosity at 120°C using Brookfield viscometer (manufactured by Brookfield Viscometers Ltd.) after melting the moisture-curable hot melt adhesive at 120°C. When the viscosity was measured, a rotor No. 27 was used.

The moisture-curable hot melt adhesive according to the present invention can contain other additives as long as the additives do not exert an adverse influence on the reaction of the alicyclic polycarbonate urethane polyol with the isocyanate compound to form the alicyclic urethane prepolymer, and the objective moisture-curable hot melt adhesive of the present invention can be obtained. There is no particular limitation on timing of the addition of the additive(s) to the moisture-curable hot melt adhesive as long as the objective moisture-curable hot melt adhesive of the present invention can be obtained. The additive(s) may be added, for example, together with the alicyclic polycarbonate urethane polyol and the aromatic isocyanate compound in the case of synthesizing the alicyclic urethane prepolymer. Alternatively, first, the polycarbonate urethane polyol may be reacted with the isocyanate compound to synthesize the alicyclic urethane prepolymer, and then the additive(s) may be added.

The "additives" are usually used materials in the moisture-curable hot melt adhesive and there is no particular limitation on the additives, as long as the objective moisture-curable hot melt adhesive of the present invention can be obtained. Examples of the additives include a plasticizer, an antioxidant, a dye, an ultraviolet absorber, a flame retardant, a catalyst, a wax and the like.

Examples of the "plasticizer" include dioctyl phthalate, dibutyl phthalate, dioctyl adipate, mineral spirit and the like.

Examples of the "antioxidant" include a phenol-based antioxidant, a phosphite-based antioxidant, a thioether-based antioxidant, an amine-based antioxidant and the like.

Examples of the "dye" include titanium oxide, carbon black and the like.

Examples of the "ultraviolet absorber" include benzotriazole, hindered amine, benzoate, hydroxyphenyltriazine and the like.

Examples of the "flame retardant" include a halogen-based flame retardant, a phosphorous-based flame retardant, an antimony-based flame retardant, a metal hydroxide-based flame retardant and the like.

Examples of the "catalyst" include metal-based catalysts such as tin-based catalysts (trimethyltin laurate, trimethyltin hydroxide, dibutyltin dilaurate, dibutyltin maleate, etc.), lead-based catalysts (lead oleate, lead naphthenate, lead octoate, etc.), and other metal-based catalysts (naphthenic acid metal salts such as cobalt naphthenate) and amine-based catalysts such as triethylenediamine, tetramethylethylenediamine, tetramethylhexylenediamine, diazabicycloalkenes, dialkylaminoalkylamines and the like.

Examples of the "wax" include waxes such as paraffin wax and microcrystalline wax.

The automobile interior material according to the present invention is generally produced by bonding a base material and an adherend through the above moisture-curable hot melt adhesive. For example, in the case of bonding the adherend to a plastic material as a base material, the moisture-curable hot melt adhesive may be applied to either the base material side or the adherend side.

In the present invention, there is no particular limitation on the "adherend" of the automobile interior material, and a fibrous material is preferable. The fibrous material is obtained by knitting a synthetic fiber or a natural fiber using a spinning machine to form a sheet.

In the present invention, there is no particular limitation on the "base material" of the automobile interior material, and a thermoplastic resin is preferable. Examples of the thermoplastic resin include:

heat-resistant polystyrene based resins such as a styrene-acrylic acid copolymer, a styrene-maleic anhydride copolymer, and a styrene-itaconic acid copolymer;
modified PPE based resins such as a resin mixture of a PPE based resin and a PS based resin, and a styrene-phenylene ether copolymer such as a styrene graft polymer of PPE;
polycarbonate resins; and
polyester based resins such as polybutylene terephthalate and polyethylene terephthalate.

These resins can be used alone, or used in combination.

The thermoplastic resin serving as the base material is preferably polyethylene terephthalate, and the polyethylene terephthalate may be foam or not foam.

There is no need to use a special apparatus so as to produce the automobile interior material of the present invention. The automobile interior material can be produced using generally known production apparatuses including a conveyor, a coater, a press machine, a heater, and a cutter.

While allowing a base material and an adherend to flow on a conveyer, the base material or adherend is coated with the moisture-curable hot melt adhesive according to the present invention using a coater. The temperature at the time of applying is controlled to a predetermined temperature by a heater. The adherend and the base material are bonded to each other through the moisture-curable hot melt adhesive by slightly pressing the adherend against the base material using a press machine. Then, the laminated adherend and base material are left standing to cool and allowed to flow as they are, thereby solidifying the moisture-curable hot melt adhesive. Then, the base material laminated with the adherend is cut into an appropriate size by a cutter.

In the automobile interior material of the present invention, the moisture-curable hot melt adhesive does not deteriorate due to sunlight transmitted through glass or high temperature in the summer season, and thus it is less likely to cause peeling between the base material and the adherend even in the summer season.

Main embodiments of the present invention are shown below.

1. A moisture-curable hot melt adhesive comprising an alicyclic urethane prepolymer having isocyanate group(s) at the ends, wherein
the alicyclic urethane prepolymer comprises a chemical structure derived from a polycarbonate polyol, and
at least one of the isocyanate group(s) at the ends is combined with a chemical structure derived from an aromatic ring, and wherein
the alicyclic urethane prepolymer comprises a urethane prepolymer obtainable by mixing an alicyclic polycarbonate urethane polyol with an aromatic isocyanate, and
the alicyclic polycarbonate urethane polyol comprises an alicyclic polyol obtainable by mixing a polycarbonate polyol with an alicyclic isocyanate.

2. The moisture-curable hot melt adhesive according to the above 1, wherein the alicyclic urethane prepolymer comprises a prepolymer obtainable by mixing an alicyclic polycarbonate urethane polyol and a polycarbonate polyol with an aromatic isocyanate.

3. The moisture-curable hot melt adhesive according to any one of the above 1 to 2, which is used for the production of an automobile interior material.

4. An automobile interior material obtainable by applying the moisture-curable hot melt adhesive according to any one of the above 1 to 3.

5. A method for producing a moisture-curable hot melt adhesive, which comprises the following steps (i) and (ii):

(i) a step of mixing a polycarbonate polyol with an alicyclic isocyanate to prepare an alicyclic polycarbonate urethane polyol; and
(ii) a step of mixing the alicyclic polycarbonate urethane polyol with an aromatic isocyanate to prepare an alicyclic urethane prepolymer.

Examples

The present invention will be described below by way of Examples and Comparative Examples, and these Examples are merely for illustrative purposes and are not meant to be limiting on the present invention.

Components of the moisture-curable hot melt adhesives used in Examples and Comparative Examples are shown below.

<(A) Polycarbonate Polyol>

(A1) Polycarbonate diol [Duranol G3450J (product name) manufactured by Asahi Kasei Chemicals Corporation, hydroxyl value of 140 (mgKOH/g), number average molecular weight (Mn) of about 800, polycarbonate polyol produced from 1,3-propanediol and 1,4-butanediol]
(A2) Polycarbonate diol [Duranol G3452 (product name) manufactured by Asahi Kasei Chemicals Corporation, hydroxyl value 56 of (mgKOH/g), number average molecular weight (Mn) of about 2,000, polycarbonate polyol produced from 1,3-propanediol and 1,4-butanediol]
(A3) Polycarbonate diol [Duranol T5652 (product name) manufactured by Asahi Kasei Chemicals Corporation, hydroxyl value of 56 (mgKOH/g), number average molecular weight (Mn) of about 2,000, polycarbonate polyol produced from 1,5-pentanediol and 1,6-hexanediol]
(A4) Polycarbonate diol [Duranol T5650E (product name) manufactured by Asahi Kasei Chemicals Corporation, hydroxyl value of 225 (mgKOH/g), number average molecular weight (Mn) of about 500, polycarbonate polyol produced from 1,5-pentanediol and 1,6-hexanediol]

<(A') Polyester Polyol>

(A'5) Polyester polyol [HS2F-231AS (product name) manufactured by HOKOKU Co., Ltd., hydroxyl value of 56 (mgKOH/g), number average molecular weight (Mn) of about 2,000, polyester polyol produced from adipic acid, 1,6-hexanediol and neopentyl glycol]

<(B) Isocyanate Compound>

(B1) Isocyanate compound having an alicyclic structure (alicyclic isocyanate compound)
(B1-1) IPDI (5-isocyanato-1-isocyanatomethyl-1,3,3-trimethylcyclohexane (isophorone diisocyanate) [Desmodule I (product name) manufactured by Sumika Bayer Urethane Co., Ltd.]
(B1-2) $H_{12}$MDI (bis(4-isocyanatocyclohexyl)methane (hydrogenated diphenylmethane diisocyanate) [Desmodule W (product name) manufactured by Sumika Bayer Urethane Co., Ltd.]
(B1-3) $H_6$XDI (1,3-bis(isocyanatomethyl)cyclohexane (hydrogenated xylylene diisocyanate) [TAKENATE 600 (product name) manufactured by Mitsui Chemicals, Inc.]

Isocyanate Compound having no Alicyclic Structure

(B2) Aliphatic isocyanate compound
(B2-1) HDI (hexamethylene diisocyanate) [Duranate 50M-HDI (product name) manufactured by Asahi Kasei Chemicals Corporation]
(B3) Aromatic isocyanate compound
(B3-1) XDI (xylylene diisocyanate) [TAKENATE 500 (product name) manufactured by Mitsui Chemicals, Inc.]

<Additives>

(ca1) Curing catalyst 1 dimorpholinodiethyl ether [U-Cat 660M (product name) manufactured by San-Apro Ltd., amine-based curing catalyst]
(UA1) Ultraviolet absorber 1 [TINUVIN 479 (product name) manufactured by BASF Corp., hydroxytriazine-based ultraviolet absorber]
(AO1) Antioxidant 1 [ADK STAB AO-50 (product name) manufactured by ADEKA CORPORATION, phenol-based antioxidant]
(LS1) Light stabilizer 1 [EVERSORB 93 (product name) manufactured by Everlight Chemical, amine-based antioxidant]

<Synthesis of Polycarbonate Urethane Polyols>

Polycarbonate diols (A1) to (A4) and isocyanate compounds (B1-1) to (B3-1) in each amount of parts by weight (composition) shown in Table 1 were mixed to prepare polycarbonate urethane polyols (PCUO1 to PCUO6). Specifically, the polycarbonate diols were stirred at 100°C under reduced pressure for 1 hour. After removing moisture, the isocyanate compounds were added at the same temperature, followed by stirring under reduced pressure for 2 hours to obtain polycarbonate urethane polyols. The amount of the remaining isocyanate in the obtained polycarbonate urethane polyol was measured by titration in accordance with the method defined in JIS K 7301, thus confirming that there is no remaining isocyanate. PCUO1 to PCUO4 have an alicyclic structure, while PCUO'5 to PCUO'6 have no alicyclic structure.

Table 1

| | PCUO1 | PCUO2 | PCUO3 | PCUO4 | PCUO'5 | PCUO'6 |
|---|---|---|---|---|---|---|
| A1 | 80 | | 80 | 80 | 80 | 80 |
| A4 | | 80 | | | | |
| B1-1 | 13.3 | 17.8 | | | | |
| B1-2 | | | 15.4 | | | |
| B1-3 | | | | 11.5 | | |
| B2-1 | | | | | 10.0 | |
| B3-1 | | | | | | 11.2 |
| Alicyclic structure | Yes | Yes | Yes | Yes | No | No |

<Production of Moisture-Curable Hot Melt Adhesive>

Examples 1 to 7 and Comparative Examples 1 to 8

PCUO1 to PCUO'6 were mixed with other raw materials in each ratio shown in Tables 2 and 3 to produce moisture-curable hot melt adhesives. Specifically, all raw materials except for the isocyanate compounds were charged in a reaction vessel and the temperature was raised to 120°C, followed by stirring under reduced pressure for 1 hour. After removing moisture, the isocyanate compounds were added at the same temperature, followed by stirring under reduced pressure for 2 hours to obtain moisture-curable hot melt adhesives.

Melt viscosity of the moisture-curable hot melt adhesive was evaluated, and also it was evaluated whether or not terminal isocyanate group(s) is/are combined with a chemical structure derived from an aromatic ring.

<Coatability (Measurement of Viscosity)>

Using a viscometer (manufactured by Brookfield Engineering Labs), a viscosity was measured. A specific amount (10.5 g) of a molten moisture-curable hot melt adhesive was charged in a viscosity tube and a spindle (No. 27) was inserted into the viscometer. After being left to stand at 120°C for 30 minutes, a melt viscosity was measured at 120°C.

<NMR Measurement (Chemical Structure combined with End Isocyanate Group(s))>

It was confirmed by NMR measurement whether or not a chemical structure derived from an aromatic ring is combined with terminal isocyanate group(s).

In order to evaluate adhesion property of the moisture-curable hot melt adhesives of Examples and Comparative Examples, a T (type) peel test was performed. Furthermore, in order to evaluate light resistance (light-resisting adhesive force) and light resistance (discoloration and fading), irradiation with ultraviolet rays was performed before a T peel test. In order to evaluate curing property (heat resistance), a heat-resistant creep test was performed.

Test methods and evaluation criteria are shown below.

<Adhesion Property after Aging (Adhesive Force after Aging)>

A polyethylene terephthalate (PET) foam as an automobile interior material, and a PET cloth were used as an adherend. The PET foam was spray-coated with the moisture-curable hot melt adhesives of Examples 1 to 7 and Comparative Examples 1 to 8 in a coating amount of 20 g/m$^2$. The PET foam and the PET cloth were bonded to each other and hand roll pressing was performed while heating a surface to about 60°C by a dryer to produce a test piece. The test piece thus produced was aged under the environment at 23°C and relative humidity of 50% for 1 week, and then cut into pieces of 25 mm in width. The test piece thus obtained was subjected to a T peel test and a peel strength was measured. Using a tensile testing machine (SC-50NM-S0, manufactured by JT Tohsi Inc.) in the T peel test, a peel strength was measured by T (type) peeling at a testing speed of 100 mm/min.

Adhesion property after aging was evaluated as follows based on the value of the measured peel strength (unit: N/25 mm).

A: 15.0 or more
B: 12.5 or more and less than 15.0
C: 10.0 or more and less than 12.5
D: less than 10.0

<Light Resistance (Light-Resisting Adhesive Force)>

Using Fade Meter (manufactured by SUGA TEST INSTRUMENTS CO., LTD.), the test piece was irradiated with ultraviolet rays at 83°C for 200 hours after aging for 1 week. After irradiation with ultraviolet rays, a T peel test was performed in the same manner as the evaluation of adhesion property after aging, and then a peel strength was measured. A strength retention ratio was calculated from the peel strength before irradiation with ultraviolet rays and that after irradiation with ultraviolet rays. The strength retention ratio is represented by the following equation.

$$\text{Strength retention ratio (\%) = peel strength after irradiation with ultraviolet rays/peel strength before irradiation with ultraviolet rays} \times 100$$

A: Strength retention ratio of 80% or more
B: Strength retention ratio of 50% or more and less than 80%
C: Strength retention ratio of less than 50%

<Light Resistance (Discoloration and Fading)>

Using Fade Meter (manufactured by SUGA TEST INSTRUMENTS CO., LTD.), the test piece was irradiated with ultraviolet rays at 83°C for 200 hours after aging for 1 week. After irradiation with ultraviolet rays, the degrees of discoloration and fading were evaluated as follows in accordance with JIS L 0842 (color fastness test method to UV carbon arc lamp).

G (Good): Class 4 or higher
P (Poor): Lower than class 4

<Curing Property (Heat Resistance)>

The test piece was subjected to a heat-resistant creep test in the atmosphere at 90°C under a static load of 125 g after aging for 1 week. Curing property was evaluated as follows.

G (Good): no creep occurs (less than 2 mm)
P (Poor): creep occurs (2 mm or more)

Table 2

| | Examples | | | | | | |
|---|---|---|---|---|---|---|---|
| | 1 | 2 | 3 | 4 | 5 | 6 | 7 |
| PCUO1 | 58.3 | 70.0 | | | | 93.3 | 91.0 |
| PCUO2 | | | 52.5 | | | | |
| PCUO3 | | | | 71.6 | | | |
| PCUO4 | | | | | 68.6 | | |
| PCUO'5 | | | | | | | |
| PCUO'6 | | | | | | | |
| A1 | | | | | | | |
| A2 | 30.0 | 20.0 | | 20.0 | 20.0 | | |
| A3 | | | 40.0 | | | | |
| A'5 | | | | | | | |
| B1-1 | | | | | | | |
| B3-1 | 14.3 | 14.3 | 14.0 | 14.5 | 14.0 | 14.9 | 18.0 |
| CA1 | 0.2 | 0.2 | 0.2 | 0.2 | 0.2 | 0.2 | 0.2 |
| UA1 | 1 | 1 | 1 | 1 | 1 | 1 | 1 |
| AO1 | 0.2 | 0.2 | 0.2 | 0.2 | 0.2 | 0.2 | 0.2 |
| LS1 | 0.2 | 0.2 | 0.2 | 0.2 | 0.2 | 0.2 | 0.2 |
| Combining between NCO groups at ends and chemical structure derived from aromatic ring | Yes | Yes | Yes | Yes | Yes | Yes | Yes |
| Coatability (Viscosity mPa·s at 120°C) | 6,500 | 7,500 | 8,300 | 16,000 | 9,800 | 7,800 | 4,200 |
| Adhesion property after aging (Unit: N/25 mm) | 14.5 B | 16.8 A | 14.7 B | 18.9 A | 13.9 B | 20.5 A | 19.2 A |
| Light resistance (Light-resisting adhesive force) | A | A | A | A | A | A | A |
| Light resistance (Discoloration and Fading) | G | G | G | G | G | G | G |
| Curing property (Heat resistance) | G | G | G | G | G | G | G |

Table 3

| | Comparative Examples | | | | | | | |
|---|---|---|---|---|---|---|---|---|
| | 1 | 2 | 3 | 4 | 5 | 6 | 7 | 8 |
| PCUO1 | | | | 70.0 | | 70.0 | | |
| PCUO2 | | | | | | | | |
| PCUO3 | | | | | | | | |
| PCUO4 | | | | | | | | |
| PCUO'5 | 67.6 | | | | | | | |
| PCUO'6 | | | | | 68.4 | | 68.4 | |
| A1 | | | | | | | | 60 |
| A2 | 20.0 | 90.0 | | 20.0 | 20.0 | | 20 | 20 |
| A3 | | | 90.0 | | | | | |
| A'5 | | | | | | 20.0 | | |
| B1-1 | | | | 14.0 | | | 16.8 | 10 |
| B3-1 | 14.0 | 14.4 | 14.4 | | 14.3 | 12.3 | | 14.3 |
| CA1 | 0.2 | 0.2 | 0.2 | 0.2 | 0.2 | 0.2 | 0.2 | 0.2 |
| UA1 | 1 | 1 | 1 | 1 | 1 | 1 | 1 | 1 |
| AO1 | 0.2 | 0.2 | 0.2 | 0.2 | 0.2 | 0.2 | 0.2 | 0.2 |
| LS1 | 0.2 | 0.2 | 0.2 | 0.2 | 0.2 | 0.2 | 0.2 | 0.2 |
| Combining between NCO groups at ends and chemical structure derived from aromatic ring | Yes | Yes | Yes | No | Yes | Yes | No | No |
| Coatability (Viscosity mPa·s at 120°C) | 8,800 | 7,400 | 10,000 | 6,800 | 8,300 | 4,800 | 6,750 | 8,350 |
| Adhesion property after aging (Unit: N/ 25 mm) | 10.9 C | 5.5 D | 2.7 D | 6.3 D | 16.2 A | 8.4 D | 14.4 B | 14.2 B |
| Light resistance (Light-resisting adhesive force) | A | A | A | C | A | C | C | C |
| Light resistance (Discoloration and Fading) | G | G | G | G | P | G | G | G |
| Curing property (Heat resistance) | G | G | G | P | G | G | P | P |

As shown in Table 2, the moisture-curable hot melt adhesives of Examples 1 to 7 are excellent in adhesion property, light resistance (light-resisting adhesive force, yellowing and fading) and curing property (heat resistance) since they include an alicyclic urethane prepolymer having a chemical structure derived from a polycarbonate polyol, and also terminal isocyanate group(s) of an alicyclic urethane prepolymer is/are combined with a chemical structure derived from an aromatic ring. The moisture-curable hot melt adhesives of Examples are also excellent in coatability since the viscosity at 120°C is not so high.

The moisture-curable hot melt adhesives of Comparative Examples 1 to 8 are inferior in any one of adhesion property, light resistance (light-resisting adhesive force, yellowing and fading) and curing property (heat resistance) as compared with the moisture-curable hot melt adhesives of Examples since they contain no alicyclic urethane prepolymer, or terminal isocyanate group(s) of an alicyclic urethane prepolymer is/are not combined with a chemical structure derived from an aromatic ring.

As mentioned above, it has been shown that the moisture-curable hot melt adhesive according to the present invention is excellent in adhesion property, light resistance and curing property because of including a specific alicyclic urethane prepolymer.

Industrial Applicability

The present invention provides a moisture-curable hot melt adhesive and an automobile interior material. The moisture-curable hot melt adhesive according to the present invention is suitable for automobile interior material applications because of its excellent adhesion property, light resistance and curing property. The automobile interior material according to the present invention does not undergo peeling between a base material resin and an adherend even when continuously exposed to severe condition of high temperature and high humidity over the long term, and is not discolored by exposure to sunlight.

**Claims**

1. A moisture-curable hot melt adhesive comprising an alicyclic urethane prepolymer having isocyanate group(s) at the ends, wherein
   the alicyclic urethane prepolymer comprises a chemical structure derived from a polycarbonate polyol, and
   at least one of the isocyanate group(s) at the ends is combined with a chemical structure derived from an aromatic ring, and wherein
   the alicyclic urethane prepolymer comprises a urethane prepolymer obtainable by mixing an alicyclic polycarbonate urethane polyol with an aromatic isocyanate, and
   the alicyclic polycarbonate urethane polyol comprises an alicyclic polyol obtainable by mixing a polycarbonate polyol with an alicyclic isocyanate.

2. The moisture-curable hot melt adhesive according to claim 1, wherein the alicyclic urethane prepolymer comprises a prepolymer obtainable by mixing an alicyclic polycarbonate urethane polyol and a polycarbonate polyol with an aromatic isocyanate.

3. The moisture-curable hot melt adhesive according to any one of claims 1 to 2, which is used for the production of an automobile interior material.

4. An automobile interior material obtainable by applying the moisture-curable hot melt adhesive according to any one of claims 1 to 3.

5. A method for producing a moisture-curable hot melt adhesive, which comprises the following steps (i) and (ii):

   (i) a step of mixing a polycarbonate polyol with an alicyclic isocyanate to prepare an alicyclic polycarbonate urethane polyol; and
   (ii) a step of mixing the alicyclic polycarbonate urethane polyol with an aromatic isocyanate to prepare an alicyclic urethane prepolymer.

**Patentansprüche**

1. Feuchtigkeitshärtender Schmelzklebstoff, umfassend ein alicyclisches Urethanpräpolymer mit (einer) Isocyanatgruppe(n) an den Enden, wobei
   das alicyclische Urethanpräpolymer eine von einem Polycarbonatpolyol abgeleitete chemische Struktur umfasst und mindestens eine der Isocyanatgruppe(n) an den Enden mit einer von einem aromatischen Ring abgeleiteten chemischen Struktur kombiniert ist und wobei
   das alicyclische Urethanpräpolymer ein Urethanpräpolymer umfasst, das durch Mischen eines alicyclischen Polycarbonaturethanpolyols mit einem aromatischen Isocyanat erhältlich ist, und
   das alicyclische Polycarbonaturethanpolyol ein alicyclisches Polyol umfasst, das durch Mischen eines Polycarbonatpolyols mit einem alicyclischen Isocyanat erhältlich ist.

2. Feuchtigkeitshärtender Schmelzklebstoff nach Anspruch 1, wobei das alicyclische Urethanpräpolymer ein Präpolymer umfasst, das durch Mischen eines alicyclischen Polycarbonaturethanpolyols und eines Polycarbonatpolyols mit einem aromatischen Isocyanat erhältlich ist.

3. Feuchtigkeitshärtender Schmelzklebstoff nach einem der Ansprüche 1 bis 2, der zum Erzeugen eines Autoinnenraummaterials verwendet wird.

4. Autoinnenraummaterial, erhältlich durch Aufbringen des feuchtigkeitshärtenden Schmelzklebstoffs nach einem der Ansprüche 1 bis 3.

5. Verfahren zum Erzeugen eines feuchtigkeitshärtenden Schmelzklebstoffs, das die folgenden Schritte (i) und (ii) umfasst:

(i) einen Schritt zum Mischen eines Polycarbonatpolyols mit einem alicyclischen Isocyanat zum Herstellen eines alicyclischen Polycarbonaturethanpolyols; und
(ii) einen Schritt zum Mischen des alicyclischen Polycarbonaturethanpolyols mit einem aromatischen Isocyanat zum Herstellen eines alicyclischen Urethanpräpolymers.

**Revendications**

1. Adhésif thermofusible durcissable à l'humidité comprenant un prépolymère d'uréthane alicyclique ayant un/des groupe(s) isocyanate(s) aux extrémités, dans lequel le prépolymère d'uréthane alicyclique comprend une structure chimique dérivée d'un polycarbonate polyol, et au moins un du/des groupe(s) isocyanate(s) aux extrémités est/sont combiné(s) avec une structure chimique dérivée d'un anneau aromatique, et dans lequel le prépolymère d'uréthane alicyclique comprend un prépolymère d'uréthane qui peut être obtenu par le mélange d'un polyol d'uréthane de polycarbonate alicyclique avec un isocyanate aromatique, et le polyol d'uréthane de polycarbonate alicyclique comprend un polyol alicyclique qui peut être obtenu par le mélange d'un polyol de polycarbonate avec un isocyanate alicyclique.

2. Adhésif thermofusible durcissable à l'humidité selon la revendication 1, dans lequel le prépolymère d'uréthane alicyclique comprend un prépolymère pouvant être obtenu en mélangeant un polyol d'uréthane de polycarbonate alicyclique et un polyol de polycarbonate avec un isocyanate aromatique.

3. Adhésif thermofusible durcissable à l'humidité selon l'une quelconque des revendications 1 à 2, qui est utilisé pour la production d'un matériau d'intérieur d'automobile.

4. Matériau d'intérieur d'automobile pouvant être obtenu en appliquant l'adhésif thermofusible durcissable à l'humidité selon l'une quelconque des revendications 1 à 3.

5. Procédé de production d'un adhésif thermofusible durcissable à l'humidité, qui comprend les étapes (i) et (ii) suivantes :

(i) étape de mélange d'un polyol de polycarbonate avec un isocyanate alicyclique afin de préparer un polyol d'uréthane de polycarbonate alicyclique ; et
(ii) étape de mélange du polyol d'uréthane de polycarbonate alicyclique avec un isocyanate aromatique afin de préparer un prépolymère d'uréthane alicyclique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2305882 A
- JP 2007051282 A
- US 2009208759 A1